# EUROPEAN PATENT SPECIFICATION

(11) **EP 3 605 753 B1**
(45) Date of publication and mention of the grant of the patent: **12.01.2022**
(21) Application number: 17902503.6
(22) Date of filing: 03.11.2017
(51) Int. Cl.: H01S 3/067

(54) **DOPED FIBER AMPLIFIER AND WORK METHOD THEREOF**
DOTIERTER FASERVERSTÄRKER UND ARBEITSVERFAHREN DAFÜR
AMPLIFICATEUR À FIBRE DOPÉE ET SON PROCÉDÉ DE FONCTIONNEMENT

(30) Priority: 24.03.2017 CN 201710184416
(43) Date of publication of application: 05.02.2020
(73) Proprietor: O-Net Communications (Shenzhen) Limited, Shenzhen, Guangdong 518000 (CN)
(72) Inventor: LU, Kaiyuan, Shenzhen Guangdong 518000 (CN); HUA, Yimin, Shenzhen Guangdong 518000 (CN)
(74) Representative: Mirlach, Xiaolu
(86) International application number: PCT/CN2017/109282
(87) International publication number: WO 2018/171206

(56) References cited:
- CN-A- 1 988 422
- CN-A- 101 083 381
- CN-A- 101 330 191
- CN-A- 101 330 191
- CN-A- 101 950 913
- CN-A- 105 406 330
- CN-A- 106 961 065
- US-A- 6 011 645
- US-A1- 2016 141 828

## Description

### TECHNICAL FIELD

The present disclosure relates to a field of pluggable laser radar light source technology, and in particular to a doped optical fiber amplifier and working method thereof.

### BACKGROUND

A laser radar is a radar system that emits a laser beam to detect a position and velocity of a target. At present, most of the laser radar light sources use a semiconductor laser with a wavelength of 905 nm. However, a frequency of the laser radar light sources is low, the safety threshold of the human eye is low, and the light source adopts an asynchronous operation mode during scanning. At present, the erbium doped fiber amplifier (EDFA) is designed as a single-stage erbium doped fiber amplifier with forward 980 nm and back 1480 nm bidirectional pumping. CN 101330191 A and US 6011645 A are such documents using erbium doped fiber amplifier.

### SUMMARY

The technical problem to be solved by the present disclosure is to provide a doped fiber amplifier and a working method thereof for realizing 1550 nm signal light amplification by a pump laser by using a rare earth doped fiber.

The present disclosure provides a doped fiber amplifier including a seed source inputting signal light, a first isolator connected with the seed source, a coupler connected with the first isolator, a pump laser and a doped fiber connected with the coupler, a second isolator connected with the doped fiber, an optical splitter connected with the second isolator, a connection head connected with the optical splitter. The connection head outputs the signal light of the seed source.

Furthermore, the optical splitter includes main path signal optical fibers and branch path signal optical fibers. All of the main path signal optical fibers are connected with the second isolator and the connection head.

Furthermore, the doped fiber amplifier includes a detector connected with the branch path signal optical fiber of the optical splitter

Furthermore, the detector is a photodiode.

Furthermore, the seed source is a laser with a wavelength of 1550 nm.

Furthermore, the coupler is a wavelength divider.

Furthermore, the doped fiber is selenium doped fiber.

Furthermore, the doped fiber amplifier is arranged in a pluggable optical module housing.

The present disclosure provides a working method includes steps:
emitting signal light, from a seed source to a first isolator;
passing through the first isolator, and the signal light is transmitted to a coupler unidirectionally;
providing energy to the coupler by a pump laser;
coupling the input signal light and energies provided by the pump laser into a doped fiber by the coupler;
inputting the signal light and the energies to a second isolator by the doped fiber, and passing through the second isolator to the optical splitter unidirectionally; and
outputting the signal light from the optical splitter through a detector, while outputting the signal light to a connector.

The present disclosure realizes 1550 nm signal light amplification by the pump laser with the use of the Se-doped fiber, and a repetition frequency of the 1550 nm laser can reach megahertz. Further, the laser has a high-water absorption coefficient, when the wavelength laser irradiates person eyes, the damage threshold to the human eyes is high, thus, the laser of the band has human eyes safety characteristics. In addition, the light source uses a standard pluggable optical module package form, and has broad application prospects in fields of automatic driving and 3D scanning.

### BRIEF DESCRIPTION OF DRAWINGS

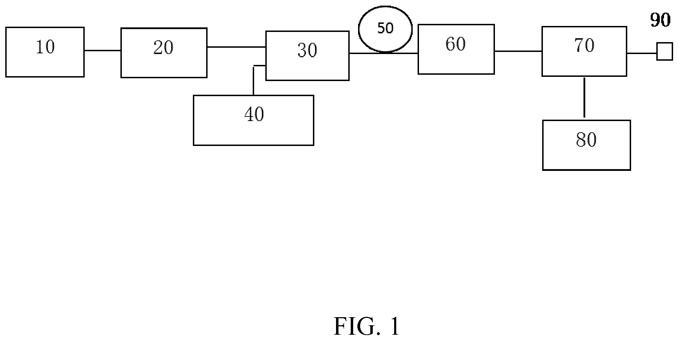

FIG. 1 is a schematic diagram showing a structure of a doped fiber amplifier of the present disclosure.

### DETAILED DESCRIPTION

As shown in FIG. 1, the present disclosure provides a doped fiber amplifier including a seed source 10 inputting signal light, a first isolator 20 connected with the seed source 10, a coupler 30 connected with the first isolator 20, a pump laser 40 and a doped fiber 50 connected with the coupler 30, a second isolator 60 connected with the doped fiber 50, an optical splitter 70 connected with the second isolator 60, a detector 80 connected with the optical splitter 70, and a connection head 90 connected with the optical splitter 70. The connection head 90 outputs the signal light of the seed source 10.

In one embodiment, the coupler 30 is a wavelength divider. The function of the coupler 30 is to couple an input signal and a pump light into the doped fiber 50, and transfers an energy of the pump light into the input optical signal through the doped fiber 50 to realize amplification of the input optical signal.

In one embodiment, the doped fiber 50 is Se-doped fiber 50. Selenium ions are activated to amplify the optical signal in a 1550 nm operating window with low optical transmission loss.

In one embodiment, the seed source is a laser with a wavelength of 1550 nm. A pigtail (fiber) of the seed source 10 is welded with a pigtail (fiber) of the first isolator 20. The pigtail (fiber) of the first isolator 20 is welded with a pigtail (signal fiber) of the coupler 30. A pigtail (fiber) of the pump laser 40 is welded with a pigtail (pump fiber) of the coupler 30. The doped fiber 50 is welded with a pigtail (fiber) of the second isolator 60.

In one embodiment, the optical splitter 70 includes main path signal optical fibers and branch path signal optical fibers. The pigtail (fiber) of the second isolator 60 is fused with a pigtail (main signal fiber) of the optical splitter 70. A pigtail (shunt signal fiber) of the optical splitter 70 is fused with a pigtail (fiber) of the detector 80. A pigtail (main road signal fiber) of the optical splitter 70 is welded with an output terminal connector 90 (optical fiber).

In one embodiment, the detector 80 ensures that the entire doped fiber amplifier operates within a predetermined output optical power. The detector is a photodiode.

The present disclosure provides a working method includes steps:
Step 1: emitting signal light, from a seed source 10 to a first isolator 20;
Step 2: passing through the first isolator 20, and the signal light is transmitted to a coupler 30 unidirectionally;
Step 3: providing energy to the coupler 30 by a pump laser 40;
Step 4: coupling the input signal light and energies provided by the pump laser 40 into the doped fiber 50 by the coupler 30;
Step 5: inputting the signal light and the energies to a second isolator 60 by the doped fiber 50, and passing through the second isolator 60 to the optical splitter 70 unidirectionally; and
Step 6: outputting the signal light from the optical splitter 70 through a detector, while outputting the signal light to a connector.

The present disclosure realizes 1550 nm signal light amplification by the pump laser 40 with the use of Se-doped fiber 50, and the repetition frequency of the 1550 nm laser can reach megahertz. Further, the laser has a high-water absorption coefficient, when the wavelength laser irradiates person eyes, the damage threshold to the human eyes is high, thus, the laser of the band has human eyes safety characteristics. In addition, the light source uses a standard pluggable optical module package form, and has broad application prospects in fields of automatic driving and 3D scanning.

The optics and electronics of the laser radar source are packaged in standard pluggable optical module housings (e.g. SFP, SFP+, XFP, CFP, CFP2, etc.), which is communicated and module controlled using standard MSA protocols through gold fingers.

The invention is defined by the appended independent claims.

## Claims

1. A doped fiber amplifier comprising a seed source (10) inputting signal light, a first isolator (20) connected with the seed source (10), a coupler (30) connected with the first isolator (20), a pump laser (40) and a doped fiber (50) connected with the coupler (30), a second isolator (60) connected with the doped fiber (50), an optical splitter (70) connected with the second isolator (60), and a connection head (90) connected with the optical splitter (70), wherein the connection head (90) outputs the signal light of the seed source (10); the pump laser (40) and the first isolator (20) are connected to inputs of the coupler (30); the doped fiber (50) is connected to an output of the coupler (30); and the seed source (10) is a laser with a wavelength of 1550 nm;
**characterized in that**
the doped fiber (50) is a Se-doped fiber.

2. The doped fiber amplifier according to claim 1, wherein the optical splitter (70) comprises main path signal optical fibers and branch path signal optical fibers, all of the main path signal optical fibers are connected with the second isolator (60) and the connection head (90).

3. The doped fiber amplifier according to claim 2, wherein the doped fiber amplifier comprising a detector (80) connected with the branch path signal optical fiber of the optical splitter (70).

4. The doped fiber amplifier according to claim 3, wherein the detector (80) is a photodiode.

5. The doped fiber amplifier according to claim 1, wherein the coupler (30) is a wavelength divider.

6. The doped fiber amplifier according to claim 1, wherein the doped fiber amplifier is arranged in a pluggable optical module housing.

7. A working method of the doped fiber amplifier according to any claims 1 to 6, comprising steps:
emitting signal light with a wavelength of 1550 nm, from a seed source (10) to a first isolator (20);
passing through the first isolator (20), and the signal light is transmitted to a coupler (30) unidirectionally;
providing energy to the coupler by a pump laser (40);
coupling the input signal light and energies provided by the pump laser into a doped fiber (50) by the coupler (30);
inputting the signal light and the energies to a second isolator (60) by the doped fiber (50), and passing through the second isolator (60) to the optical splitter (70) unidirectionally; and
outputting the signal light from the optical splitter (70) through a detector (80), while outputting the signal light to a connector,
**characterized in that**
the doped fiber (50) is a Se-doped fiber.

## Patentansprüche

1. Dotierter Faserverstärker, umfassend eine Seed-Quelle (10), die Signallicht eingibt, einen ersten Isolator (20), der mit der Seed-Quelle (10) verbunden ist, einen Koppler (30), der mit dem ersten Isolator (20) verbunden ist, einen Pumplaser (40) und eine dotierte Faser (50), die mit dem Koppler (30) verbunden ist, einen zweiten Isolator (60), der mit der dotierten Faser (50) verbunden ist, einen optischen Splitter (70), der mit dem zweiten Isolator (60) verbunden ist, und einen Verbindungskopf (90), der mit dem optischen Splitter (70) verbunden ist, wobei der Verbindungskopf (90) das Signallicht der Seed-Quelle (10) ausgibt; der Pumplaser (40) und der erste Isolator (20) mit Eingängen des Kopplers (30) verbunden sind; die dotierte Faser (50) mit einem Ausgang des Kopplers (30) verbunden ist; und die Seed-Quelle (10) ein Laser mit einer Wellenlänge von 1550 nm ist;
**dadurch gekennzeichnet, dass**
die dotierte Faser (50) eine Se-dotierte Faser ist.

2. Dotierter Faserverstärker nach Anspruch 1, wobei der optische Splitter (70) optische Hauptpfadsignalfasern und optische Zweigpfadsignalfasern umfasst, wobei alle der optischen Hauptpfadsignalfasern mit dem zweiten Isolator (60) und dem Verbindungskopf (90) verbunden sind.

3. Dotierter Faserverstärker nach Anspruch 2, wobei der dotierte Faserverstärker einen Detektor (80) umfasst, der mit der optischen Zweigpfadsignalfaser des optischen Splitters (70) verbunden ist.

4. Dotierter Faserverstärker nach Anspruch 3, wobei der Detektor (80) eine Photodiode ist.

5. Dotierter Faserverstärker nach Anspruch 1, wobei der Koppler (30) ein Wellenlängenteiler ist.

6. Dotierter Faserverstärker nach Anspruch 1, wobei der dotierte Faserverstärker in einem steckbaren optischen Modulgehäuse angeordnet ist.

7. Arbeitsverfahren des dotierten Faserverstärkers nach einem der Ansprüche 1 bis 6, umfassend die Schritte:
Emittieren von Signallicht mit einer Wellenlänge von 1550 nm von einer Seed-Quelle (10) zu einem ersten Isolator (20);
Durchleiten des ersten Isolators (20), und das Signallicht wird unidirektional zu einem Koppler (30) übertragen;
Bereitstellen von Energie an den Koppler durch einen Pumplaser (40);
Koppeln des eingegebenen Signallichtes und der Energien, die durch den Pumplaser bereitgestellt werden, in eine dotierte Faser (50) durch den Koppler (30);
Eingeben des Signallichtes und der Energien zu einem zweiten Isolator (60) durch die dotierte Faser (50), und unidirektionales Durchleiten des zweiten Isolators (60) zu dem optischen Splitter (70); und
Ausgeben des Signallichtes von dem optischen Splitter (70) durch einen Detektor (80), während das Signallicht zu einem Verbinder ausgegeben wird,
**dadurch gekennzeichnet, dass**
die dotierte Faser (50) eine Se-dotierte Faser ist.

## Revendications

1. Amplificateur à fibre dopée comprenant une source de germe (10) entrant un signal lumineux, un premier isolateur (20) connecté à la source de germe (10), un coupleur (30) connecté au premier isolateur (20), un laser de pompage (40) et une fibre dopée (50) connectés au coupleur (30), un second isolateur (60) connecté à la fibre dopée (50), un diviseur optique (70) connecté au second isolateur (60), et une tête de connexion (90) connectée au diviseur optique (70), ladite tête de connexion (90) délivrant en sortie le signal lumineux de la source de germe (10) ; le laser de pompage (40) et le premier isolateur (20) sont connectés aux entrées du coupleur (30) ; la fibre dopée (50) est connectée à une sortie du coupleur (30) ; et la source de germe (10) est un laser avec une longueur d'onde de 1550 nm ;
**caractérisé en ce que**
la fibre dopée (50) est une fibre dopée au Se.

2. Amplificateur à fibre dopée selon la revendication 1, ledit diviseur optique (70) comprenant des fibres optiques de signal de chemin principal et des fibres optiques de signal de chemin de dérivation, toutes les fibres optiques de signal de chemin principal sont connectées au second isolateur (60) et à la tête de connexion (90).

3. Amplificateur à fibre dopée selon la revendication 2, ledit amplificateur à fibre dopée comprenant un détecteur (80) connecté à la fibre optique de signal de chemin de dérivation du diviseur optique (70).

4. Amplificateur à fibre dopée selon la revendication 3, ledit détecteur (80) étant une photodiode.

5. Amplificateur à fibre dopée selon la revendication 1, ledit coupleur (30) étant un diviseur de longueur d'onde.

6. Amplificateur à fibre dopée selon la revendication 1, ledit amplificateur à fibre dopée étant agencé dans un boîtier de module optique enfichable.

7. Procédé de fonctionnement de l'amplificateur à fibre dopée selon l'une quelconque des revendications 1 à 6, comprenant les étapes :
d'émission d'un signal lumineux avec une longueur d'onde de 1550 nm, à partir d'une source de germe (10) vers un premier isolateur (20) ;
de passage à travers le premier isolateur (20), et le signal lumineux est transmis à un coupleur (30) de manière unidirectionnelle ;
de fourniture d'énergie au coupleur par un laser de pompage (40) ;
de couplage du signal lumineux d'entrée et des énergies fournies par le laser de pompage dans une fibre dopée (50) par le coupleur (30) ;
d'entrée du signal lumineux et des énergies dans un second isolateur (60) par la fibre dopée (50), et le passage à travers le second isolateur (60) jusqu'au diviseur optique (70) de manière unidirectionnelle ; et
de sortie du signal lumineux du diviseur optique (70) à travers un détecteur (80), tout en délivrant en sortie le signal lumineux à un connecteur, **caractérisé en ce que** la fibre dopée (50) est une fibre dopée au Se.
